# EUROPEAN PATENT SPECIFICATION

(11) **EP 2 059 399 B1**
(45) Date of publication and mention of the grant of the patent: **08.09.2010**
(21) Application number: 06809980.3
(22) Date of filing: 08.09.2006
(51) Int. Cl.: B60C 27/10

(54) **ANTI-SKID DEVICE FOR WHEELS**
GLEITSCHUTZVORRICHTUNG FÜR RÄDER
DISPOSITIF ANTI-PATINAGE POUR ROUES

(43) Date of publication of application: 20.05.2009
(73) Proprietor: Weissenfels Traction S.p.A., 31025 Santa Lucia di Piave (TV) (IT)
(72) Inventor: GOBESSI Mario, 33100, UDINE (IT); PIASENZOTTO Marco, 33100, UDINE (IT)
(74) Representative: Colò, Chiara
(86) International application number: PCT/IT2006/000650
(87) International publication number: WO 2008/029424

(56) References cited:
- EP-A1- 0 298 906
- EP-A1- 0 528 506
- WO-A1-03/011618

## Description

### Technical Field

The invention relates to an anti-skid device for wheels.

The invention relates in particular to an anti-skid device for wheels which is particularly suitable for improving adherence of a wheel to a road surface which is covered with snow or ice.

### Background Art

Various types of anti-skid devices are in wide use on the market. The most common ones use, as a main adherence component, a structured chain predisposed to be positioned in contact with the wheel tread, and for this reason they are known as "snow chains". The chain positioned on the tread of the wheel enables the snowy surface of the road to be broken up, offering wheel-road purchase in a sort of rack effect.

The greatest recent developments in the field of anti-skid devices are mostly concerned with the aim of facilitating mounting of the devices onto the wheels. In a recent and special realisation, involving a frontal mounting, the anti-skid devices comprise a structured chain, predisposed to be arranged in contact with a wheel tread, which is associated to a series of radial arms which maintain the chain in a position of contact with the tread. These radial arms, which are connected to one another either directly or by means of a support body, are anchored to the wheel in a concentric position thereto. Means for fastening anchor the radial arms or the support body to the wheel, blocking on the nuts which fasten the wheel to the rotation axis thereof. Mounting a snow chain of the described type is relatively rapid with respect to mounting snow chains of a more traditional type. to mount the chain it is sufficient to position the support body and the radial arms in a concentric position with respect to the wheel and to fasten the support body to the wheel by means of the fastening means provided for that purpose.

Document EP 0298906 discloses an anti-skid device wherein the running network is formed from grip element carriers made of rubber or plastic and chain length sections connecting the latter to one another. The grip element carriers consist of longitudinal pieces which are oriented essentially flush with the chain length sections and X-shaped spacing elements which keep these longitudinal pieces at a distance from one another. The longitudinal pieces are equipped with spikes in the region of grip elements of log-like construction. Some of the grip element carriers have extensions to which the ends of retaining arms are connected in articulated fashion, the said arms pressing the running network resiliently into the region of the tread of the vehicle wheel.

Document WO 03011618 discloses an anti-skid device according to the preamble of claim 1, for the wheels of vehicles, comprising a holding element situated in the region of the wheel axis and used with elastic holding arms holding a chain mesh. According to the invention, a tension cable is used to introduce tension forces into the holding arms. In order to introduce a defined tensile stress into the tension cable, said tension cable is connected to a pivotable tension lever. A disadvantage of the chains is that they are adaptable to precise wheel diameters, and therefore oblige the constructors to make a very wide selection of variants in order to cover the very broad range wheels and tyres at present on the market.

Further, in prior-art frontal-mounting chains, the means for fastening to the wheel generally comprise an anchoring element which is blocked on the locking screws of the wheel and a flexible element, typically a cable or chain, which connects the anchoring element to the support body. Once the anchoring element has been secured to the wheel, it is necessary to exert a force on the support body or the radial arms which reduces the distance between the means for fastening and the support body. This force is generally exerted by manually pulling or pushing. This constitutes a considerable problem as frequently the chain has to be mounted in emergency conditions, i.e. in the presence of snow and/or mud. In these conditions, and in some prior-art solutions, the flexible element tends to get wet and become slippery, so that the mounting thereof, which must above all else be performed quite quickly, might turn out to be problematic.

A further disadvantage of front-mounting chains of known type is that the fastening of the anchoring element to the wheel is in general rather complex, so that in the majority of cases the anchoring element is mounted on the wheel at the start of the winter season and removed when sudden snowfalls are no longer expected. In other mounting solutions precise locking conditions are not guaranteed.

The main aim of the present invention is to provide an anti-skid device for wheels, or snow chains, which is simple and quick to mount as well as remove, and which can be adapted to wheels of different diameters.

### Disclosure of Invention

The characteristics and advantages of the device will better emerge from the detailed description of the invention that follows, with reference to the accompanying figures of the drawings, given by way of non-limiting example, in which:
- figure 1 is a schematic view of a device of the present invention in combination with a wheel;
- figure 2 is a view from the left towards the right of the device of figure 1;
- figures 3,4,5,6 show various views of some components of the device of figure 1;
- figures 7, 8, 9 show various view of an anchoring element of the device of figure 1;
- figures 10, 11 show two views relating to different configurations of use of an alternative embodiment of the anchoring device illustrated in figures 7, 8 and 9;
- figures 12, 13 show two views of a further component of the device of figure 1;
- figures 14, 15 show two views of a further embodiment of the anchoring system illustrated in figures 7, 8 and 9.

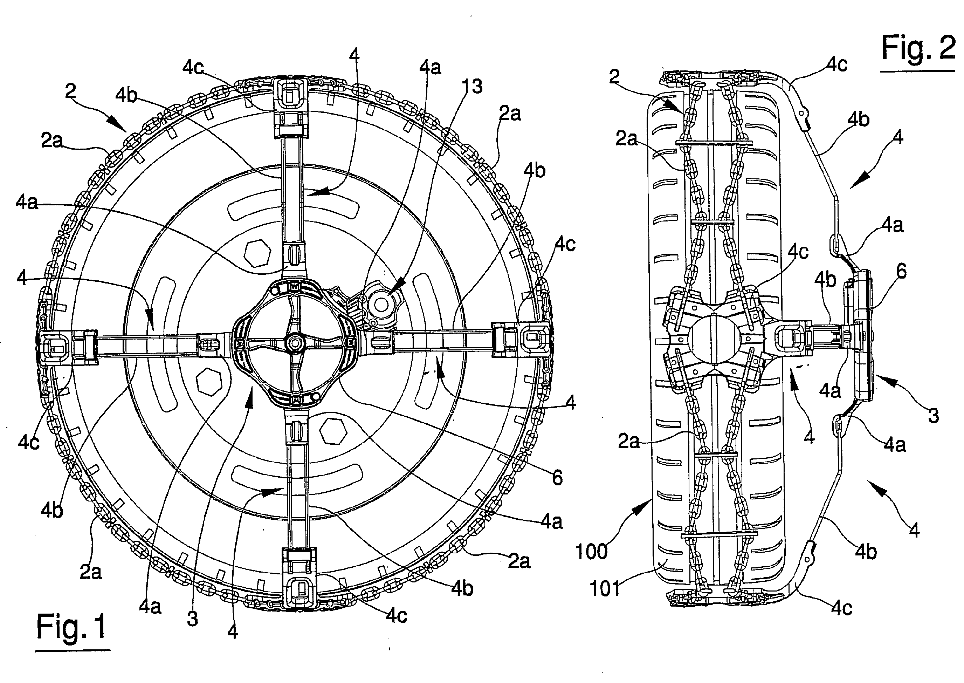

With reference to the figures of the drawings, and in particular figures 1 and 2, the anti-skid device of the present invention comprises a structured chain 2 predisposed to be arranged in contact with the tread 101 of a wheel 100. The chain is preferably structured as a succession of rhombi which connect to one another in succession at opposite vertices thereof. The vertices at which the rhombi connect up are actually constituted by a flat plate arranged transversally of the tread 101. At a diagonal position of the rhombi there is a flat plate, longer than a preceding plate, which, when the device is associated to a wheel, is arranged transversally of the tread 101 in order to increase the grip of the wheel 100 on the snow.

The device further comprises a support body 3 which is coaxially associable to the wheel 100, solidly in translation with respect to a rotation axis x of the wheel 100. The support body 3 is provided with radial arms 4 which support and hold the structured chain 2 in contact with the tread 100. When the device is mounted on the wheel, the support body 3 is in a concentric position with respect to the wheel 100. The radial arms 4 are preferably four in number for light use but more for heavy use, and are separated by a constant mean angular distance; they are made of several parts as they progress from the support body 3 to the tread 101 on which the structured chain 2 is to be positioned. Means for fastening 5 are predisposed for associating the support body 3 to the wheel 100.

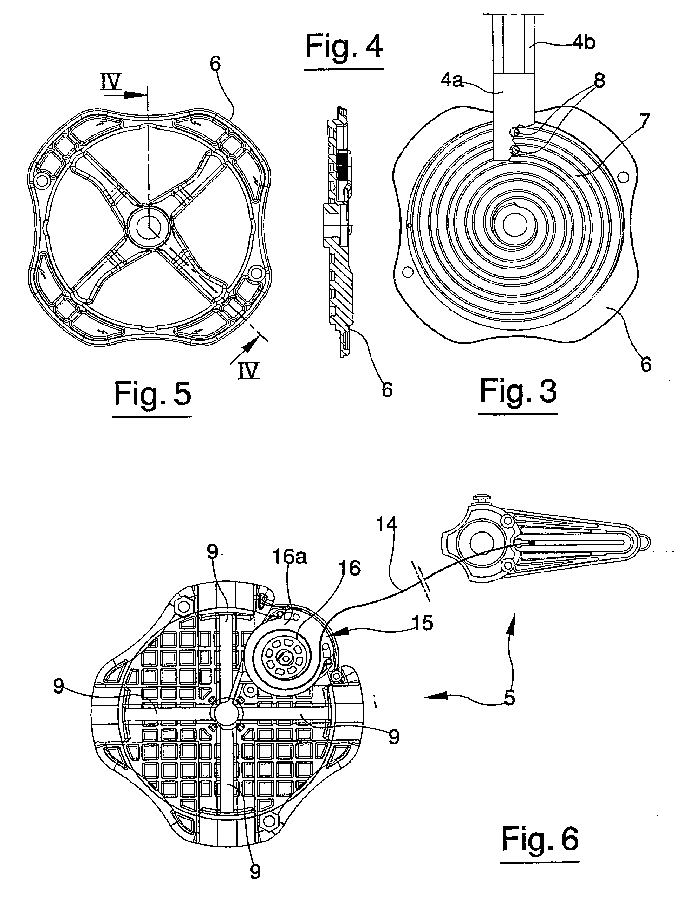

The radial arms 4 are translatable in a radial direction with respect to the rotation axis x of the wheel 100 between a position of minimum radial extension and a position of maximum radial extension. The radial translation of the arms 4 is done by acting on a positioning shell 6, associated to the support body 3, which is rotatable about an axis which is parallel to the rotation axis x of the wheel 100 (figures 3, 4, 5, 6). The positioning shell 6 is provided with a constant-step spiral groove 7 which is concentric to the rotation axis of the positioning shell 6 itself. Engagement pins 8, solidly constrained to an end of the radial arms 4, are slidable with respect to the spiral groove 7 and are at least partially housed internally of the spiral groove 7. The rotation of the positioning shell 6, via the rotation of the spiral groove 7, causes a radial translation of the engagement pins 8 to which the radial arms 4 are solidly constrained. Since the spiral groove 7 has a constant step, a rotation of the positioning shell 6 causes a radial translation which is equal for all the radial arms 4. To facilitate rotation of the positioning shell 6, it is frontally provided with projecting appendages. The possibility of radially adjusting the position of the radial arms 4, which is preferably done individually in sequence, means the anti-skid device can be adapted to different-diameter wheels (within a determined range). The radial adjustment of the arms 4 is done in order to adapt the chain to various predetermined tyre sizes. Once the adjustment has been performed for the desired tyre, the positioning shell 6 is blocked by screws or other means with respect to the support body 3. From this moment on no other radial adjustments are necessary except in the case of use of the device on a different-sized tyre. The radial position of the arms can be identified by notches made on the radial arms themselves.

The radial arms 4 comprise a first, a second and a third portion 4a, 4b and 4c. The first portion 4a, to which the engagement pins 8 are associated, is slidable along straight radial guides 9 which are solidly constrained to the support body 3. The second portion 4b is hinged at an end to the first portion 4a about a perpendicular axis to the rotation axis x of the wheel 100 with a limited radial sliding possible. The radial sliding is obtained by housing the rotation pin between the first and the second portion, or between the second and third portions, internally of slots that can be made either on the first or the second portion (in the figures the slots are made on the second portion). Thanks to this special coupling between the first and the second portions 4a, 4b, the radial arms 4 can be radially adapted to the wheel 100 deformations. The third portion 4c is hinged to the second portion 4b about a perpendicular axis to the rotation axis x of the wheel 100 at the opposite end to the first portion 4a. The structured chain 2 is associated to the third portion 4c. The hinge between the portions 4a, 4b and 4c of the radial arms 4 enables them to be folded into a configuration which means the anti-skid device is very compact when not mounted on the wheel 100.

In order to be adapted to the radial displacement of the radial arms 4, the structured chain 2 exhibits a length that is variable between a minimum, in which it circumferentially joins the radial arms 4 in the minimum radial extension position, and a maximum, in which it joins the radial arms 4 in the maximum radial extension position. For this purpose, the structured chain 2 is made up of distinct portions 2a, each of which joins together two consecutive radial arms 4. Each of these portions 2a is provided with end links 21 which are transversally slidable with respect to the radial arms 4 between at least a first position, in which the structured chain exhibits a minimum length, and at least a second position, in which the structured chain exhibits a maximum length. The position of the end links 21 varies preferably in discrete steps in accordance with the positions taken up by the radial arms 4.

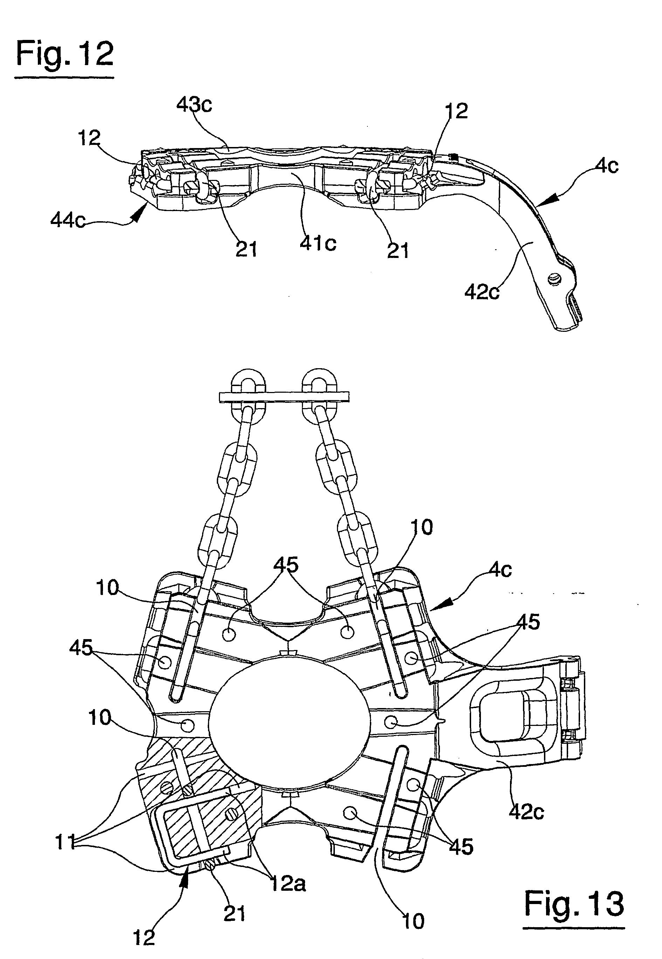

Each end link 21 is slidable in a respective first housing 10 made in a third portion 4c of the radial arms 4 (figures 12, 13). The first housing 10 is intersected by a second housing 11 in which a shaped pin 12 can be inserted, which pin 12 is arranged at least partially internally of the end link 21, preventing the pin 12 from sliding out of the first housing 10.

Each shaped pin 12 exhibits a fork conformation provided with two parallel stems 12a. The second housing 11 is constituted by three equidistant, parallel and straight holes, in which the parallel stems 12a can be inserted. The parallel stems 12a are insertable in the second housing 11 in a first position, in which they occupy two consecutive holes, or in a second position, in which they occupy the other two consecutive holes. In order to pass from the first to the second position, the shaped pin 12 can partially be extracted from the second housing 11 and be rotated by 180° about the stem 12a inserted in a central housing 11. The displacement of the end link 21 corresponds therefore to the distance which separates the parallel stems 12a.

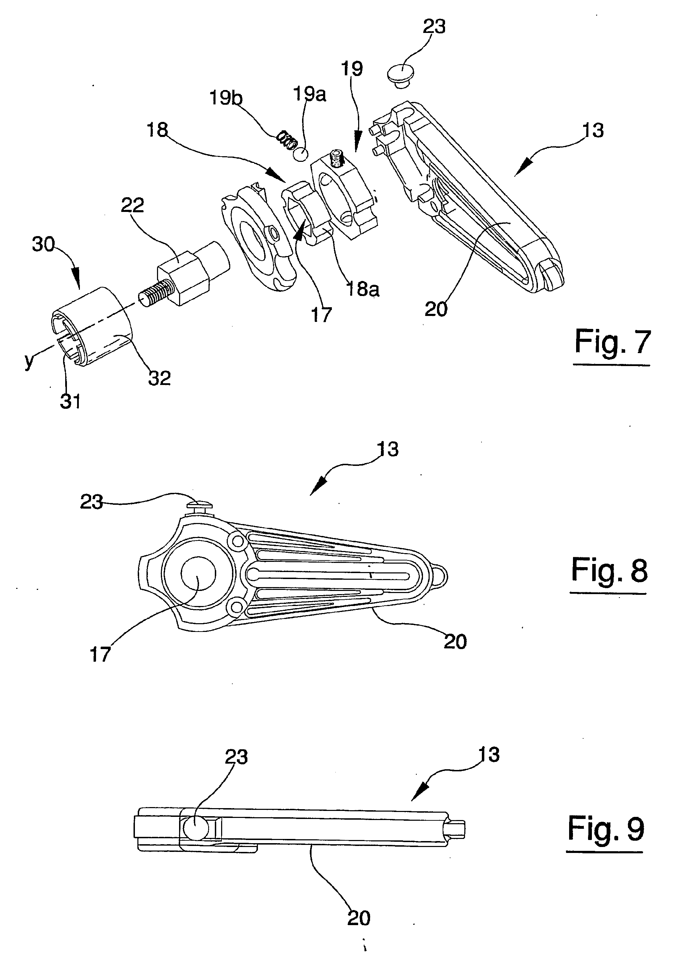

The means for fastening 5, predisposed to associate the support body 3 to the wheel 100, comprise an anchoring element 13, predisposed to be constrained to the wheel 100 with respect to translation along the rotation axis x of the wheel itself (figures 7, 8, 9).

The anchoring element 13 comprises a gripping organ 30, of known type, comprising an internal bush 31 and an external bush 32 which are concentric with respect to a longitudinal axis y. The internal bush 31 is provided with an opening in which it can internally house a head of a fastening screw of the wheel 100. The internal bush 31 is deformable between a slack configuration, in which it houses the screw head with play, and a tight configuration, in which it internally locks the head of the screw preventing relative sliding in a parallel direction to the rotation axis x of the wheel 100.

The internal bush 31 is coaxially inserted internally of the external bush 32. The two bushes are in reciprocal contact at least at the lateral conical surfaces thereof which, as they slide one on another, cause deformation of the internal bush 31 between the slack and the tight configurations. In particular, the conical surfaces of the two bushes diverge towards the opening of the internal bush 31 in such a way that, when the internal bush 31 is slid towards the external bush 32, the internal bush 31 deforms into the tightened configuration, locking onto the head of the screw.

A threaded element 22 comprises a threaded cylindrical part and a non-threaded cylindrical part which are coaxial, and a hexagonal locking head which connects the two parts to one another. The threaded cylindrical part of the threaded element 22 crosses the two bushes 31 and 32 along the axis y, screwing into a threaded central hole of the internal bush 31 and inserting into a non-threaded hole in the external bush 32. The contact with the hexagonal locking head of the element 22 limits single-direction translation of the external bush 32 along the axis y of the threaded element 22. Consequently, when the head of a fastening screw is housed in the internal bush 31, preventing rotation thereof, a rotation about axis y of the threaded element 22 causes a relative axial translation between the two bushes 31 and 32 and therefore the passage of the internal bush 31 from the locked configuration to the slack configuration and vice versa.

A lever 20, associated to the threaded element 22, facilitates rotation manoeuvres of the threaded element 22. The lever, which is preferably of a torque meter type, comprises a first ring 18 predisposed to slidingly couple with the hexagonal locking head of the threaded element 22. The first ring 18 externally bears shaped seatings 18a which are predisposed to interact with at least a sphere 19a which projects internally of a second ring 19 pushed by a spring 19b (there could however be several spheres 19a pushed by several springs 19b). A button 23 connected to the spring 19b enables action by the spring 19b on one of the spheres 19a with an external force which is added to the force of the spring 19b. The second ring 19 is coaxial to the first ring 18 and is rotatable concentrically to the first spring 18. The lever 20 is mobile in translation along the axis y with respect to the threaded element 22 between a use position in which the first spring 18 is slidingly coupled to the locking head of the threaded element 22 and a rest position, in which the first ring 18 surrounds the non-threaded cylindrical part of the threaded element 22 and the lever 20 is free to rotate idly about the longitudinal axis y of the threaded element 22.

The rotation of the second ring 19 is performed by means of the lever 20. The lever 20 is connected to a first end of a flexible element 14, preferably a steel cable or another suitable material, which, at the other end thereof, is connected to the support body 3.

The lever 20 functions in a similar way to a common torque meter key. When the sphere 19a is housed internally of a shaped seating 18a (or, in the case where several spheres 19a are present, when they are housed in a respective seating 18a), a coupling is achieved by dint of an obstacle between the first ring 18 and the second ring 19. In these conditions a torque imparted on the second ring 19 by the lever 20 is passed on to the first ring 18 up until the torque is sufficient to cause a push on the sphere 19a which, directed against the push exerted by the spring 19b, disengages the sphere 19a from the shaped seating 18a. In this way a sufficiently precise control can be had over the locking torque impressed on the second bush 32 with respect to the firs bush 31, and consequently the intensity of the pressure the first bush 31 exerts peripherally on the screw head. The presence of the button 23 increases the pushing force on the sphere 19a should, on using the lever 20 to bring the internal bush into the slack configuration, the pushing force of the spring 19b not be sufficient to realise the coupling between the two rings 18 and 19.

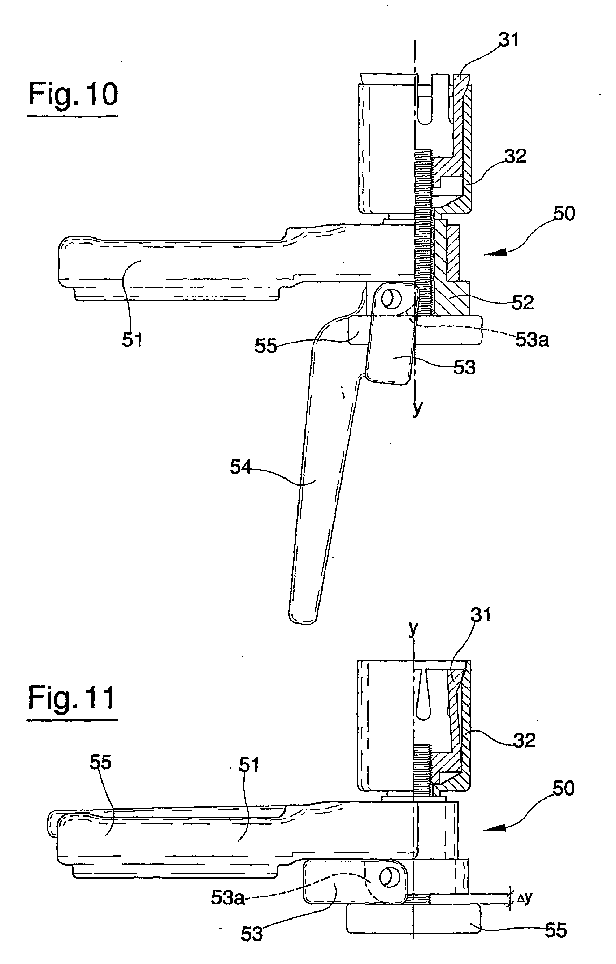

In an alternative embodiment, illustrated in figures 10 and 11, the relative axial sliding between the internal bush 31 and the external bush 32 is performed by means of a cam device 50.

The cam device 50 comprises a first member 55 to which the internal bush 31 is constrained in axial translation. A second member 52, solidly constrained to the external bush 32 in axial translation, is coaxial to the first member 55 and is rotatable about the longitudinal axis y.

A cam 53 is located between the first and second members 55, 52, which cam 53 is provided with a shaped surface 53a that is rotatable about an axis between a first and a second position. In the first position the arc of curvature of the shaped surface 53a in a parallel direction to the longitudinal axis y is minimal (figure 10). In this first position of the cam 53 the internal bush 31 is in the slack configuration. In the second position of the cam 53, the degree of curvature of the shaped surface 53a in a parallel direction to the longitudinal axis y is at a maximum (figure 11), in this second position of the cam 53 the internal bush 31 is in the locked position thereof.

The cam 53 is rotatably associated to the second member 52 and is arranged so that the contact between the cam 53 and the first member 55 always occurs internally of the shaped surface 53a. The cam 53 is associated to a positioning grip 54 by means of which it can be rotated with respect to the first and second members 55, 52. A grip 51 is also associated to the second member 52, with freedom to rotate about the longitudinal axis y, to which grip 51 is connected an end of the flexible element 14 and which grip 51 has also the function of facilitating rotation of the positioning grip 54. The shaped surface 53a of the cam 53 is preferably conformed in such a way that in order to bring the internal bush 31 from the slack configuration (figure 10) to the locked configuration (figure 11) it is necessary to near the two grips to one another.

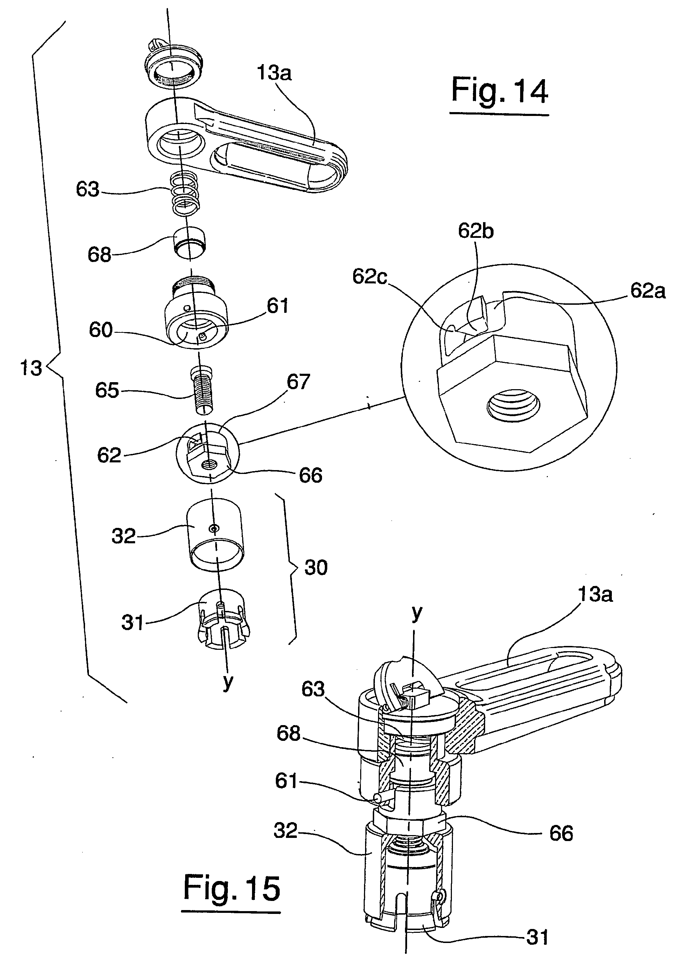

In a further embodiment of the invention, illustrated in figures 14 and 15, the anchoring element 13 comprises a connecting element 13a to which an end of the flexible element 14 is connected. The anchoring element 13 can be manipulated to bring it from an assembled configuration, in which the gripping organ 30 is coupled to the connecting element 13a, to a non-assembled configuration, in which the gripping organ 30 is disengaged from the connecting element 13a and vice versa.

The coupling of the gripping organ 30 to the connecting element 13a includes the introduction of the free cylindrical end 67 of the gripping organ 30 into a circular hub 60 solidly constrained to the connecting element 13a. At least a pin 61 projects radially from the internal wall of the circular hub 60. A groove 62, predisposed slidingly to receive the pin 61 internally thereof, is afforded in the surface of the cylindrical end of the gripping organ 30. The groove exhibits a first tract 62a which develops, starting from the free surface of the cylindrical end 67, in a parallel direction to the longitudinal axis y; a second tract 62b which extends circumferentially along the cylindrical end 67 and which terminates in a seating 62c which is specially shaped and faces the free surface of the cylindrical end 67. In bringing the anchoring element 13 from the unassembled to the assembled configuration, when the gripping organ 30 is introduced into the circular hub 60 there is a corresponding sliding of the pin 61 along the first tract 62a of the groove 62; a subsequent rotation of the anchoring element 13 with respect to the gripping organ 30 translates into a sliding of the pin 61 along the second tract 62b of the groove 62, up until it inserts in the seating 62c. The action of a compression spring 63, connected to the anchoring element 13 in such a way as to oppose the introduction of the cylindrical end 67 in the circular hub 60, maintains the pin 61 in its seating 62c.

In this embodiment, the internal bush 31 and the external bush 32 are connected to one another by a screw 65 which crosses them along the axis y. A nut 66 is screwed onto the screw 65. As the internal bush 31, differently to the external bush 32, is solid in translation along the axis y with respect to the screw 65, the rotation of the nut 66 with respect to the axis y causes a translation along the axis y, which is in effect a relative axial translation between the two bushes and is therefore a passage of the internal bush 31 from the locked configuration into the slack configuration and vice versa.

A recall mechanism 15 is predisposed to exert a traction on the flexible element 14, directed towards the support body 3 and the rotation axis x of the wheel 100, which tends to shorten the tract of flexible element 14 extending between the anchoring element 13 and the support body 3.

The recall mechanism 15 comprises a sprocket 16 which is set in rotation in the winding direction of the flexible element 14 by elastic means. The sprocket 16 is provided with a device which can selectively prevent rotation thereof in the winding or unwinding direction of the flexible element 14 and allows rotation on command by activation of a retaining component (not illustrated). The sprocket 16 is housed internally of a circular seating 16a, afforded internally of the support body 3, which is suitable for containing the flexible element 14 wound on the sprocket 16.

The recall mechanism 15 has a recall function for the anti-skid device with respect to the wheel 100, which considerably eases mounting of the device. The mounting operation is simple: the anchoring element 13 is simply fixed to the wheel and the radial arms 4 positioned, as is the support body 3, in the above-described positions, taking care to position the structured chain 2 on the tyre tread 101. The recall mechanism 15 shortens the flexible element 14 even at this stage of device assembly, blocking the support body 3 and the radial arms 4 against displacements in a parallel direction to the rotation axis of the wheel 100. When the wheel 100 is turned, the recall mechanism 15, which maintains its traction action on the flexible element 14, brings the flexible element 14 back as much as possible and draws the device towards the wheel 100, preventing translations of the device away from the wheel.

## Claims

1. An anti-skid device for wheels, comprising: a structured chain (2) predisposed to be arranged in contact with a tread (101) of a wheel (100); a support body (3), coaxially associable to the wheel (100) and solid in translation therewith relative to a rotation axis (x) of the wheel (100), which anti-skid device is provided with radial arms (4) which support and maintain the structured chain (2) in contact with the tread (101); means for fastening (5), predisposed to associate the support body (3) to the wheel (100); wherein:
the radial arms (4) are translatable in a radial direction with respect to the rotation axis (x) of the wheel (100) between a minimum radial extension position and a maximum radial extension position; the structured chain (2) exhibits a length which is variable between a minimum length, in which it circumferentially joins the radial arms (4) to one another in the position of minimum radial extension, and a maximum length, in which it joins the radial arms (4) to one another in the position of maximum radial extension;
the anti-skid device further comprising: an anchoring element (13), predisposed to be constrained to the wheel (100) and to be translatable along the rotation axis (x) of the wheel (100); a flexible element (14), which at a first end thereof is connected to the anchoring element (13), and which at a second end thereof is connected to the support body (3); a recall mechanism (15), predisposed to exert a traction on the flexible element (14) which traction is directed towards the support body (3) and the rotation axis (x) of the wheel (100);
**characterised in that** the recall mechanism (15) comprises a sprocket (16), activated to rotate in a winding direction of the flexible element (14) by elastic means and provided with a device which selectively prevents a rotation of the sprocket (16) in a winding or unwinding of the flexible element (14) and enables a rotation thereof on command.

2. The device of claim 1, wherein the support body (3) comprises a positioning shell (6) which is rotatable about a parallel axis to the rotation axis (x) of the wheel (100), which positioning shell (6) is provided with a spiral groove (7), concentric with respect to a rotation axis of the shell (6), in which pins (8) can slide, which pins (8) are solidly constrained to an end of the radial arms (4), which pins (8) are also at least partially housed internally of the spiral groove (7), so that a rotation of the positioning shell (6), accompanied by a rotation of the spiral groove (7), leads to a radial translation of the pins (8) to which the radial arms (4) are solidly constrained.

3. The device of claim 2, wherein the radial arms (4) comprise: a first portion (4a) to which the pins (8) are associated, which first portion (4a) is slidable along straight radial guides (9) which are solidly constrained to the support body (3); a second portion (4b), hinged to the first portion (4a) about an axis which is perpendicular to the rotation axis (x) of the wheel (100) with a limited radial sliding freedom; a third portion (4c), hinged to the second portion (4b) about an axis which is perpendicular to the rotation axis (x) of the wheel (100), to which the structured chain (2) is associated.

4. The device of any one of the preceding claims, wherein the structured chain (2) is made up of discrete portions (2a), each of which joins two consecutive radial arms (4) together, and each of which is provided with end links (21) which are circumferentially slidable with respect to the radial arms (4) between at least a first position, in which the structured chain (2) exhibits a minimum length thereof, and at least a second position, in which the structured chains exhibits a maximum length thereof.

5. The device of claim 3 or 4, wherein each end link (21) is slidable in a first housing (10) afforded in the third portion (4c) of the radial arms (4), the first housing (10) being intersected by a second housing (11) in which a shaped pin (12) is insertable, which shaped pin (12) is arranged at least partially internally of the end link (21), preventing a sliding-out thereof from the first housing (10).

6. The device of claim 5, wherein the shaped pin (12) exhibits a forked conformation exhibiting two parallel stems and the second housing (11) is constituted by three parallel, straight and equidistant holes, in which the parallel stems are insertable in a first position thereof, in which the parallel stems occupy two consecutive holes of the three holes, or in a second position thereof, in which the parallel stems occupy another two of the three holes.

7. The device of claim 7 anyone of the preceding claims, wherein the sprocket (16) being housed internally of a circular seating (16a) afforded internally of the support body (3), the circular seating (16a) being suitable for containing the flexible element (14) wound on the sprocket (16).

8. The device of claim 7, wherein the anchoring element (13) comprises a gripping organ (30) comprising an internal bush (31) and an external bush (32) which are reciprocally concentric about a longitudinal axis (y), the internal bush (31) being provided with an opening through which it can house internally thereof a head of a fastening screw of the wheel (100), the internal bush (31) being deformable, by effect of an axial sliding in relation to the external bush (32), between a slack configuration thereof, in which the internal bush (31) loosely houses the head of the screw, and a locked configuration, in which it locks the head of the screw internally thereof, preventing relative sliding in a parallel direction to the rotation axis (x) of the wheel (100).

9. The device of claim 8, wherein the internal bush (31) is screwed to a threaded element (22), which crosses the two bushes (32, 31) along the longitudinal axis (y), the translation of the external bush (32) along the longitudinal axis (y) in a distancing direction from the internal bush (31) being limited by contact with the locking head of the threaded element (22), a rotation of the threaded element (22) being obtained by means of a lever (20) of a torque-meter type.

10. The device of claim 9, wherein the lever (20) comprises a first ring (18), predisposed to couple slidingly with the locking head of the threaded element (22), which first ring (18) externally bears the shaped seatings (18a).

11. The device of claim 10, wherein the lever (20) comprises a second ring (19), coaxial to the first ring (18), internally of which at least a sphere (19a) projects, which sphere (19a) is predisposed to house at least partially internally of at least a shaped seating (18a) by effect of a push exerted by a spring (19b).

12. The device of claim 11, wherein the second ring (19) can be rotated concentrically of the first ring (18) by means of the lever (20).

13. The device of claim 12, wherein the second ring (19) is connected to the first end of the flexible element (14).

14. The device of claim 13, wherein the lever is mobile in translation with respect to the threaded element (22) between a use position in which the first ring (18) is slidingly coupled to the locking head of the threaded element (22) and a rest position, in which the lever (20) is free to rotate idly about the longitudinal axis (y) of the threaded element (22).

15. The device of claim 13 or 14, wherein the lever (20) comprises a button (23) connected to the spring (19b) for increasing the thrust exerted by the spring (19b) on the at least a sphere (19a).

16. The device of claim 8, wherein a relative axial sliding along the longitudinal axis (y) between the internal bush (31) and the external bush (32) is performed by means of a cam device (50).

17. The device of claim 16, wherein the cam device (50) comprises a second member (52), to which the external bush (32) is constrained in axial translation, and a first member (55), solidly constrained to the internal bush (31) in axial translation, which cam device (50) is associated to the second member (52) with ability to slide along the longitudinal axis (y), a cam (53) being positioned between the first and the second members (55, 52), which cam (53) is rotatably associated to the second member (52) about a rotation axis and which is provided with a shaped surface (53a) located in contact with the first member (55).

18. The device of claim 17, wherein the cam (53) is rotatable about an axis of rotation thereof between a first position and a second position, at which first position and a second position a degree of curvature of the shaped surface (53a), measured in a parallel direction to the longitudinal axis (y), assumes respectively a minimum curvature and a maximum curvature.

19. The device of claim 18, wherein the cam (53) is associated to a positioning grip (54) by means of which the cam (53) can be rotated with respect to the first member (55) and the second member (52).

20. The device of claim 19, wherein the a grip (51) is associated to the second member (52), to which grip (51) an end of the flexible element (14) is connected.

21. The device of claim 8, wherein the anchoring element (13) comprises a connecting element (13a) to which the flexible element (14) is connected, and means for manually coupling and disengaging the connecting element (13a) and the gripping organ (30).

22. The device of claim 21, wherein the means for manually coupling and disengaging the connecting element (13a) and the gripping element (30) comprise a circular hub (60) which is solidly constrained to the connecting element (13a) and predisposed at least partially to house the gripping organ (30), at least a pin (61), solidly constrained to the connecting element (13a) and radially projecting from an internal wall of the circular hub (60), a compression spring (63) arranged in such a way as to oppose an introduction of the gripping organ (30) in the circular hub (60), at least a shaped groove (62) afforded in an external surface of the gripping organ (30), the groove (62) being shaped in such a way that, by introducing the gripping organ (30) into the circular hub (60), and then rotating the two parts relatively with respect to the longitudinal axis (y), the pin (61) runs internally of the groove (62) and enters, by action of the spring (63), into a specially shaped seating therefor.

23. The device of any one of claims 21 or 22, wherein the two bushes (31, 32) are maintained together by a screw (65) and a nut (66), so that a rotation of the nut (66) causes a relative translation between the two bushes (21, 32) along the longitudinal axis (y).

## Patentansprüche

1. Gleitschutzvorrichtung für Räder, enthaltend: eine strukturierte Kette (2), dazu vorgesehen, im Kontakt mit einer Lauffläche (101) eines Rades (100) angeordnet zu werden; einen Trägerkörper (3), koaxial dem Rad (100) zuzuordnen und im Verhältnis zu einer Drehachse (x) des Rades (100) in der Translationsbewegung fest mit diesem verbunden, welche Gleitschutzvorrichtung mit radialen Armen (4) versehen ist, welche die strukturierte Kette (2) tragen und mit der Lauffläche (101) im Kontakt halten; Befestigungsmittel (5), dazu vorgesehen, den Trägerkörper (3) mit dem Rad (100) zu verbinden; bei welcher: die radialen Arme (4) in einer radialen Richtung im Verhältnis zu der Drehachse (x) des Rades (100) verschiebbar sind zwischen einer Position der minimalen radialen Ausdehnung und einer Position der maximalen radialen Ausdehnung; und bei welcher die strukturierte Kette (2) eine Länge aufweist, welche veränderbar ist zwischen einer minimalen Länge, in welcher sie umlaufend die radialen Arme (4) in der Position der minimalen radialen Ausdehnung miteinander verbindet, und einer maximalen Länge, in welcher sie die radialen Arme (4) in der Position der maximalen radialen Ausdehnung miteinander verbindet; wobei die Gleitschutzvorrichtung ausserdem enthält: ein Verankerungselement (13), dazu vorgesehen, an dem Rad (100) gehalten zu werden und verschiebbar entlang der Drehachse (x) des Rades (100) zu sein; ein flexibles Element (14), welches mit einem ersten Ende an das Verankerungselement (13) angeschlossen ist, und welches mit einem zweiten Ende an den Trägerkörper (3) angeschlossen ist; einen Rückholmechanismus (15) vorgesehen zum Ausüben einer Zugkraft auf das flexible Element (14), welche Zugkraft zu dem Trägerkörper (3) und der Drehachse (x) des Rades (100) hin gerichtet ist;
**dadurch gekennzeichnet, dass** der Rückholmechanismus (15) eine Spule (16) enthält, aktiviert, um sich mit Hilfe von elastischen Mitteln in einer Aufwickelrichtung des flexiblen Elementes (14) zu drehen, und versehen mit einer Vorrichtung, welche wahlweise eine Umdrehung der Spule (16) in einer Aufwickel- oder Abwickelrichtung des flexiblen Elementes (14) verhindert und auf einen Befehl hin eine Umdrehung derselben befähigt.

2. Vorrichtung nach Patentanspruch 1, bei welcher der Trägerkörper (3) eine Positionierschale (6) enthält, welche um eine Achse parallel zu der Drehachse (x) des Rades (100) drehbar ist, welche Positionierschale (6) mit einer spiralförmigen Rille (7) versehen ist, konzentrisch im Verhältnis zu einer Drehachse der Schale (6), in der Zapfen (8) gleiten können, welche Zapfen (8) an einem Ende der radialen Arme (4) gehalten sind, und welche Zapfen (8) ebenfalls wenigstens teilweise im Inneren der spiralförmigen Rille (7) aufgenommen sind, so dass eine Umdrehung der Positionierschale (6), begleitet von einer Umdrehung der spiralförmigen Rille (7), zu einer radialen Verschiebung der Zapfen (8) führt, an welche die radialen Arme (4) fest angeschlossen sind.

3. Vorrichtung nach Patentanspruch 2, bei welcher die radialen Arme (4) enthalten: einen ersten Abschnitt (4a), welchem die Zapfen (8) zugeordnet sind, welcher erste Abschnitt (4a) entlang geraden radialen Führungen (9) gleitbar ist, die fest an dem Trägerkörper (3) angebracht sind; einen zweiten Abschnitt (4b), angelenkt an den ersten Abschnitt (4a) um eine Achse, welche lotrecht zu der Drehachse (x) des Rades (100) verläuft, und zwar mit einer begrenzten radialen Gleitfreiheit; einen dritten Abschnitt (4c), angelenkt an den zweiten Abschnitt (4b) um eine Achse, welche lotrecht zu der Drehachse (x) des Rades (100) verläuft, welchem die strukturierte Kette (2) zugeordnet ist.

4. Vorrichtung nach einem jeden der vorstehenden Patentansprüche, bei welcher die strukturierte Kette (2) aus getrennten Abschnitten (2a) aufgebaut ist, von welchen jeder zwei aufeinanderfolgende radiale Arme (4) miteinander verbindet, und von welchen jeder mit Endgliedern (21) versehen ist, welche im Verhältnis zu den radialen Armen (4) umlaufend verschiebbar sind zwischen wenigstens einer ersten Position, in welcher die strukturierte Kette (2) ihre minimale Länge aufweist, und wenigstens einer zweiten Position, in welcher die strukturierte Kette ihre maximale Länge aufweist.

5. Vorrichtung nach Patentanspruch 3 oder 4, bei welcher jedes Endglied (21) in einem ersten Sitz (10) verschiebbar ist, aufgewiesen in dem dritten Abschnitt (4c) der radialen Arme (4), wobei der erste Sitz (10) durch einen zweiten Sitz (11) geschnitten wird, in welchen ein Profilzapfen (12) einsetzbar ist, welcher Profilzapfen (12) wenigstens teilweise im Inneren des Endgliedes (21) angeordnet ist, wobei das Herausgleiten desselben aus dem ersten Sitz (10) verhindert wird.

6. Vorrichtung nach Patentanspruch 5, bei welcher der Profilzapfen (12) eine gabelförmige Ausbildung mit zwei parallelen Stegen aufweist und der zweite Sitz (11) aus drei parallelen, geradlinigen und gleichmässig voneinander abstehenden Bohrungen gebildet ist, in welche die parallelen Stege einsetzbar sind, und zwar in ihrer ersten Position, in welcher die parallelen Stege zwei aufeinanderfolgende Bohrungen der drei Bohrungen belegen, oder in ihrer zweiten Position, in welcher die parallelen Stege die anderen zwei der drei Bohrungen belegen.

7. Vorrichtung nach einem jeden der vorstehenden Patentansprüche, bei welcher die Spule (16) im Inneren eines kreisförmigen Sitzes (16a) aufgenommen ist, aufgewiesen im Inneren des Trägerkörpers (3), wobei der kreisförmige Sitz (16a) geeignet ist zur Aufnahme des flexiblen Elementes (14), das um die Spule (16) gewickelt ist.

8. Vorrichtung nach Patentanspruch 7, bei welcher das Verankerungselement (13) ein Greiforgan (30) enthält, enthaltend eine innere Buchse (31) und eine äussere Buchse (32), welche zueinander um eine Längeachse (y) konzentrisch sind, wobei die innere Buchse (31) mit einer Öffnung versehen ist, durch welche sie in ihrem Inneren den Kopf einer Befestigungsschraube des Rades (100) aufnehmen kann, und wobei die innere Buchse (31) verformbar ist durch die Wirkung einer axialen Verschiebung im Verhältnis zu der äusseren Buchse (32), und zwar zwischen einer lockeren Konfiguration, in welcher die innere Buchse (31) den Kopf der Schraube lose aufnimmt, und einer festgezogenen Konfiguration, in welcher sie den Kopf der Schraube in ihrem Inneren blockiert, wobei ein verhältnismässiges Verschieben in paralleler Richtung zu der Drehachse (x) des Rades (100) verhindert wird.

9. Vorrichtung nach Patentanspruch 8, bei welcher die innere Buchse (31) auf ein Gewindeelement (22) geschraubt ist, welches die beiden Buchsen (32, 31) entlang der Längsachse (y) durchläuft, wobei die Verschiebung der äusseren Buchse (32) entlang der Längsachse (y) in einer sich von der inneren Buchse (31) entfernenden Richtung durch den Kontakt mit dem Festziehkopf des Gewindeelementes (22) begrenzt wird, und wobei eine Umdrehung des Gewindeelementes (22) mit Hilfe eines Hebels (20) erhalten wird, und zwar in der Art eines Drehmomentschlüssels.

10. Vorrichtung nach Patentanspruch 9, bei welcher der Hebel (20) einen ersten Ring (18) enthält, dazu vorgesehen, sich gleitend mit dem Festziehkopf des Gewindeelementes (22) zu verbinden, welcher erste Ring (18) aussen geformte Sitze (18a) enthält.

11. Vorrichtung nach Patentanspruch 10, bei welcher der Hebel (20) koaxial zu dem ersten Ring (18) einen zweiten Ring (19) enthält, in dessen Innerem wenigstens eine Kugel (19a) herausragt, welche Kugel (19a) dazu bestimmt ist, sich wenigstens teilweise in das Innere von wenigstens einem geformten Sitz (18a) einzuschieben, und zwar durch die Wirkung einer Schubkraft, ausgeübt durch eine Feder (19b).

12. Vorrichtung nach Patentanspruch 11, bei welcher der zweite Ring (19) mit Hilfe des Hebels (20) konzentrisch zu dem ersten Ring (18) gedreht werden kann.

13. Vorrichtung nach Patentanspruch 12, bei welcher der zweite Ring (19) an das erste Ende des flexiblen Elementes (14) angeschlossen ist.

14. Vorrichtung nach Patentanspruch 13, bei welcher der Hebel in der Verschiebung im Verhältnis zu dem Gewindeelement (22) beweglich ist, und zwar zwischen einer Betriebsposition, in welcher der erste Ring (18) gleitbar mit dem Festziehkopf des Gewindeelementes (22) verbunden ist, und einer Ruheposition, in welcher der Hebel (20) frei ist, sich leerlaufend um die Längsachse (y) des Gewindeelementes (22) zu drehen.

15. Vorrichtung nach Patentanspruch 13 oder 14, bei welcher der Hebel (20) einen Druckknopf (23) enthält, angeschlossen an die Feder (19b), um den durch die Feder (19b) ausgeübten Druck auf wenigstens eine Kugel (19a) zu verstärken.

16. Vorrichtung nach Patentanspruch 8, bei welcher eine entsprechende axiale Verschiebung entlang der Längeachse (y) zwischen der inneren Buchse (31) und der äusseren Buchse (32) mit Hilfe einer Nockenvorrichtung (50) ausgeführt wird.

17. Vorrichtung nach Patentanspruch 16, bei welcher die Nockenvorrichtung (50) ein zweites Element (52) enthält, an welchem die äussere Buchse (32) in der axialen Verschiebung gehalten ist, sowie ein erstes Element (55), bei der axialen Verschiebung fest mit der inneren Buchse (31) verbunden, welche Nockenvorrichtung (50) dem zweiten Element (52) zugeordnet ist, und zwar mit der Fähigkeit, sich entlang der Längsachse (y) zu verschieben, wobei eine Nocke (53) zwischen dem ersten und dem zweiten Element (55, 52) positioniert ist, welche Nocke (53) um eine Drehachse drehbar dem zweiten Element (52) zugeordnet ist, und welche mit einer geformten Oberfläche (52a) versehen ist, angeordnet im Kontakt mit dem ersten Element (55).

18. Vorrichtung nach Patentanspruch 17, bei welcher die Nocke (53) um ihre Drehachse drehbar ist, und zwar zwischen einer ersten Position und einer zweiten Position, in welcher ersten Position und der zweiten Position ein Krümmungsgrad der geformten Oberfläche (53a), gemessen in einer parallelen Richtung zu der Längsachse (y), jeweils eine minimale Krümmung und eine maximale Krümmung annimmt.

19. Vorrichtung nach Patentanspruch 18, bei welcher die Nocke (53) einem Positioniergriff (54) zugeordnet ist, mit Hilfe von welchem die Nocke (53) im Verhältnis zu dem ersten Element (55) und dem zweiten Element (52) gedreht werden kann.

20. Vorrichtung nach Patentanspruch 19, bei welcher ein Griff (51) dem zweiten Element (52) zugeordnet ist, an welchen Griff (51) ein Ende des flexiblen Elementes (14) angeschlossen ist.

21. Vorrichtung nach Patentanspruch 8, bei welcher das Verankerungselement (13) ein Verbindungselement (13a) enthält, an welches das flexible Element (14) angeschlossen ist, sowie Mittel zum Anschliessen und Freigeben des Verbindungselementes (13a) und des Greiforgans (30) durch Betätigung von Hand.

22. Vorrichtung nach Patentanspruch 21, bei welcher die Mittel zum Anschliessen und Freigeben durch Betätigung von Hand des Verbindungselementes (13a) und des Greiforgans (30) eine kreisförmige Nabe (60) enthalten, welche fest an dem Verbindungselement (13a) gehalten und dazu bestimmt ist, wenigstens teilweise das Greiforgan (30) aufzunehmen, wenigstens einen Zapfen (61), fest angebracht an dem Verbindungselement (13a) und radial von einer Innenwand der kreisförmigen Nabe (60) hervorstehend, eine Druckfeder (63), angeordnet auf solche Weise, dass sie dem Einschieben des Greiforgans (30) in die kreisförmige Nabe (60) entgegenwirkt, wenigstens eine geformte Rille (62), aufgewiesen in einer äusseren Oberfläche des Greiforgans (30), wobei die Rille (62) auf solche Weise geformt ist, dass sich beim Einschieben des Greiforgans (30) in die kreisförmige Nabe (60) und dann beim Drehen der beiden Teile im Verhältnis zu der Längsachse (y) der Zapfen (61) im Inneren der Rille (62) bewegt und durch die Wirkung der Feder (63) in einen speziell ausgeformten Sitz einrastet.

23. Vorrichtung nach einem jeden der Patentansprüche 21 oder 22, bei welcher die beiden Buchsen (31, 32) durch eine Schraube (65) und eine Mutter (66) zusammen gehalten werden, so dass eine Umdrehung der Mutter (66) eine entsprechende Verschiebung zwischen den beiden Buchsen (31, 32) entlang der Längsachse (y) bewirkt.

## Revendications

1. Dispositif anti-patinage pour roues, comprenant: une chaine structurée (2) prédisposée pour être disposée en contact avec une bande de roulement (101) d'une roue (100); un corps de support (3), coaxialement associable à la roue (100) et solidaire en translation avec cette dernière par rapport à une axe de rotation (x) de la roue (100), lequel dispositif anti-patinage étant pourvu de bras radiaux (4) qui supportent et maintiennent la chaîne structurée (2) en contact avec la bande de roulement (101); des moyens de fixation (5), prédisposés pour associer le corps de support (3) à la roue (100); dans lequel: les bras radiaux (4) peuvent être translatés dans une direction radiale par rapport à l'axe de rotation (x) de la roue (100) entre une position d'extension radiale minimum et une position d'extension radiale maximum; la chaîne structurée (2) présente une longueur variable entre une longueur minimum, dans laquelle elle joint de manière circonférentielle entre eux les bras radiaux (4) dans la position d'extension radiale minimum, et une longueur maximum, dans laquelle elle joint les bras radiaux (4) entre eux dans la position d'extension radiale maximum;
le dispositif anti-patinage comprenant de plus: un élément d'ancrage (13), prédisposé pour être engagé à la roue (100) et être translatable le long de l'axe de rotation (x) de la roue (100); un élément flexible (14), qui est connecté en correspondance de sa première extrémité à l'élément d'ancrage (13), et est connecté en correspondance de sa seconde extrémité au corps de support (3); un mécanisme de rappel (15), prédisposé pour exercer une traction sur l'élément flexible (14), laquelle traction est dirigée vers le corps de support (3) et l'axe de rotation (x) de la roue (100); **caractérisé en ce que** le mécanisme de rappel (15) comprend une bobine (16), actionnée en rotation dans une direction d'enroulement de l'élément flexible (14) par des moyens élastiques et pourvue d'un dispositif qui empêche sélectivement une rotation de la bobine (16) en enroulement ou déroulement de l'élément flexible (14) et permet sa rotation sur commande.

2. Dispositif selon la revendication 1, dans lequel le corps de support (3) comprend un boîtier de positionnement (6) pouvant pivoter autour d'un axe parallèle à l'axe de rotation (x) de la roue (100), lequel boîtier de positionnement (6) est pourvu d'une rainure en spirale (7), concentrique par rapport à un axe de rotation du boîtier (6), dans laquelle des doigts (8) peuvent coulisser, lesquels doigts (8) sont engagés de manière solidaire sur une extrémité des bras radiaux (4), lesquels doigts (8) sont également au moins partiellement logés à l'intérieur de la rainure en spirale (7), de manière à ce qu'une rotation du boîtier de positionnement (6), accompagnée d'une rotation de la rainure en spirale (7), mène à une translation radiale des doigts (8) avec lesquels les bras radiaux (4) sont solidairement engagés.

3. Dispositif selon la revendication 2, dans lequel les bras radiaux (4) comprennent: une première portion (4a) à laquelle les doigts (8) sont associés, laquelle première portion (4a) peut coulisser le long de guides radiaux rectilignes (9) qui sont solidaires du corps de support (3); une seconde portion (4b), encharnée sur la première portion (4a) autour d'un axe perpendiculaire à l'axe de rotation (x) de la roue (100) avec une liberté de coulissement radial limitée; une troisième portion (4c), encharnée sur la seconde portion (4b) autour d'un axe perpendiculaire à l'axe de rotation (x) de la roue (100), à laquelle est associée la chaîne structurée (2).

4. Dispositif selon l'une quelconque des revendications précédentes, dans lequel la chaîne structurée (2) est composée de portions distinctes (2a), chacune desquelles joignant entre eux deux bras radiaux (4) consécutifs, et chacune desquelles étant pourvue de mailles d'extrémité (21) coulissantes de manière circonférentielle par rapport aux bras radiaux (4) entre au moins une première position, dans laquelle la chaine structurée (2) présente une longueur minimum, et au moins une seconde position, dans laquelle la chaine structurée présente une longueur maximum.

5. Dispositif selon la revendication 3 ou 4, dans lequel chaque maille d'extrémité (21) peut coulisser dans un premier logement (10) formé dans la troisième portion (4c) des bras radiaux (4), le premier logement (10) étant traversé par un second logement (11) dans lequel peut être insérée une broche (12) de forme particulière, laquelle broche (12) étant disposée au moins partiellement à l'intérieur de la maille d'extrémité (21), en prévenant son coulissement hors du premier logement (10).

6. Dispositif selon la revendication 5, dans lequel la broche (12) présente une conformation fourchue présentant deux tiges parallèles et le second logement (11) est constitué de trois orifices parallèles, rectilignes et équidistants, dans lesquels les tiges parallèles sont insérables dans une première position, où elles occupent deux orifices consécutifs des trois orifices, ou dans une seconde position, dans laquelle les tiges parallèles occupent d'autres deux orifices des trois orifices.

7. Dispositif selon l'une quelconque des revendications précédentes, dans lequel la bobine (16) est logée à l'intérieur d'un logement circulaire (16a) formé à l'intérieur du corps de support (3), le logement circulaire (16a) étant adapté pour contenir l'élément flexible (14) enroulé sur la bobine (16).

8. Dispositif selon la revendication 7, dans lequel l'élément d'ancrage (13) comprend un organe de préhension (30) comprenant une bague interne (31) et une bague externe (32) réciproquement concentriques autour d'un axe longitudinal (y), la bague interne (31) étant pourvue d'une ouverture au travers de laquelle elle peut accueillir en son intérieur la tête d'une vis de serrage de la roue (100), la bague interne étant déformable, de part un coulissement axial en relation à la bague externe (32), entre une configuration lâche, dans laquelle la bague interne (31) loge librement la tête de la vis, et une configuration serrée, dans laquelle elle bloque la tête de la vis en son intérieur, en prévenant le coulissement relatif dans une direction parallèle à l'axe de rotation (x) de la roue (100).

9. Dispositif selon la revendication 8, dans lequel la bague interne (31) est vissée sur un élément fileté (22), qui traverse les deux bagues (32, 31) le long de l'axe longitudinal (y), la translation de la bague externe (32) le long de l'axe longitudinal (y) dans une direction d'éloignement par rapport à la bague interne (31) étant limitée par le contact avec la tête de blocage de l'élément fileté (22), une rotation de l'élément fileté (22) étant obtenue au moyen d'un levier (20) de type dynamométrique.

10. Dispositif selon la revendication 9, dans lequel le levier (20) comprend un premier anneau (18), prédisposé pour s'accoupler de manière coulissante avec la tête de blocage de l'élément fileté (22), lequel premier anneau (18) comporte extérieurement les logements taillés (18a).

11. Dispositif selon la revendication 10, dans lequel le levier (20) comprend un second anneau (19), coaxial au premier anneau (18), à l'intérieur duquel au moins une sphère (19a) est saillante, laquelle sphère (19a) est prédisposée pour se loger au moins partiellement à l'intérieur d'au moins un logement taillé (18a) sous l'effet d'une poussée exercée par un ressort (19b).

12. Dispositif selon la revendication 11, dans lequel le second anneau (19) peut être pivoté concentriquement au premier anneau (18) au moyen du levier (20).

13. Dispositif selon la revendication 12, dans lequel le second anneau (19) est connecté à la première extrémité de l'élément flexible (14).

14. Dispositif selon la revendication 13, dans lequel le levier est mobile en translation par rapport à l'élément fileté (22) entre une position d'utilisation, dans laquelle le premier anneau (18) est accouplé en coulissement à la tête de blocage de l'élément fileté (22), et une position de repos, dans laquelle le levier (20) est libre de pivoter autour de l'axe longitudinal (y) de l'élément fileté (22).

15. Dispositif selon la revendication 13 ou 14, dans lequel le levier (20) comprend un bouton (23) relié au ressort (19b) pour augmenter la poussée exercée par le ressort (19b) sur l'au moins une sphère (19a).

16. Dispositif selon la revendication 8, dans lequel un coulissement axial relatif le long de l'axe longitudinal (y) entre la bague interne (31) et la bague externe (32) est effectué au moyen d'un dispositif à came (50).

17. Dispositif selon la revendication 16, dans lequel le dispositif à came (50) comprend un second élément (52), sur lequel la bague externe est engagée en translation axiale, et un premier élément (55), solidaire de la bague interne (31) en translation axiale, lequel dispositif à came (50) est associé au second élément (52) avec possibilité de coulisser le long de l'axe longitudinal (y), une came (53) étant positionnée entre le premier et le second élément (55, 52), laquelle came (53) étant associée en rotation au second élément (52) autour d'un axe de rotation et étant pourvue d'une surface profilée (53a) en contact avec le premier élément (55).

18. Dispositif selon la revendication 17, dans lequel la came (53) peut pivoter autour d'un axe de rotation entre une première position et une seconde position, en correspondance desquelles première position et seconde position un rayon de courbure de la surface profilée (53a), mesuré dans une direction parallèle à l'axe longitudinal (y), prend respectivement une courbure minimum et une courbure maximum.

19. Dispositif selon la revendication 18, dans lequel la came (53) est associée à une poignée de positionnement (54) au moyen de laquelle la came (53) peut être pivotée par rapport au premier élément (55) et au second élément (52).

20. Dispositif selon la revendication 19, dans lequel une poignée (51) est associée au second élément (52), à laquelle poignée (51) étant connectée une extrémité de l'élément flexible (14).

21. Dispositif selon la revendication 8, dans lequel l'élément d'ancrage (13) comprend un élément de connexion (13a) auquel est connecté l'élément flexible (14), et des moyens manuels d'accouplement et de désaccouplement de l'élément de connexion (13a) et de l'organe de préhension (30).

22. Dispositif selon la revendication 21, dans lequel les moyens manuels d'accouplement et de désaccouplement de l'élément de connexion (13a) et de l'élément de préhension (30) comprennent un logement circulaire (60) solidaire de l'élément de connexion (13a) et prédisposé pour loger au moins partiellement l'organe de préhension (30), au moins une broche (61), solidaire de l'élément de connexion (13a) et saillante radialement d'une paroi interne du logement circulaire (60), un ressort à compression (63) disposé de manière à s'opposer à une introduction de l'organe de préhension (30) dans le logement circulaire (60), au moins une rainure entaillée (62) formée dans une surface externe de l'organe de préhension (30), la rainure (62) étant conformée de manière à ce que, en introduisant l'organe de préhension (30) dans le logement circulaire (60), et en pivotant les deux parties relativement par rapport à l'axe longitudinal (y), la broche (61) coulisse à l'intérieur de la rainure (62) et entre, sous l'action du ressort (63), dans un logement spécialement conformé.

23. Dispositif selon l'une quelconque des revendications 21 ou 22, dans lequel les deux bagues (31, 32) sont maintenues ensemble par une vis (65) et un écrou (66), de manière à ce qu'une rotation de l'écrou (66) cause une relative translation entre les deux bagues (31, 32) le long de l'axe longitudinal (y).
